# EUROPEAN PATENT APPLICATION

(11) **EP 2 234 257 A1**
(43) Date of publication of application: **29.09.2010**
(21) Application number: 10153803.1
(22) Date of filing: 17.02.2010
(51) Int. Cl.: H02M 3/335, H02M 1/42

(54) **Switching power supply and method of switching**

(30) Priority: 27.03.2009 JP 2009078544
(71) Applicant: Hitachi Media Electronics Co., Ltd., Mizusawa-ku Oshu Iwate 023-0841 (JP)
(72) Inventor: Ouchi, Takayuki, Tokyo 100-8220 (JP); Kanouda, Akihiko, Tokyo 100-8220 (JP)
(74) Representative: Beetz & Partner

(57) **Abstract**

A switching power supply includes: a rectifier for generating an output between first and second polarity terminals; a first capacitor connected in parallel to the first and second polarity terminals of the rectifying circuit; an inductor connected to one polarity terminal at one end; second and third circuits connected to and in parallel to the other end and the second polarity terminal; a transformer including primary and secondary windings; and a smoothing circuit connected to the secondary winding. The first circuit includes first and second switches connected in series. The second circuit includes a third switch and a second capacitor connected in series; the third circuit includes the primary winding and a third capacitor connected in series and is connected in parallel to the second switch. In a method of switching the third switching element is turned off while the first and second switching elements are simultaneously turned on.

## Description

### BACKGROUND OF THE INVENTION

### 1. Field of the Invention

The present invention relates to a switching power supply and a method of stitching.

### 2. Description of the Related Art

To obtain a direct current from an AC (alternate current) commercial power source by rectifying and smoothing, it is most simple to use a diode bridge and a smoothing capacitor. However, this structure operates as a so-called capacitor input type of rectifying circuit in which an input current is received only around a peak of the voltage of the commercial AC power source. This results in decrease in a power factor and increase in input harmonic wave components. The problem in the increase in the input harmonic waves is subject to a regulation on the basis of an international standard. Therefore, a countermeasure is desired to an extent according to a magnitude of an input power. In consideration of such circumstances, there are various power converters proposed such as a Power Factor Correction (PFC) converter and a converter referred to as a high power factor power converter.

Among these power converters, a most general circuit is disclosed in a document of L6599 data sheet, p. 6, [online], February 11, 2009, ST microelectronics (searched on the internet on February 17, 2009) at
<URL:http://www.st.com/stonline/products/literature/ds/12337/ 16599.pdf>.

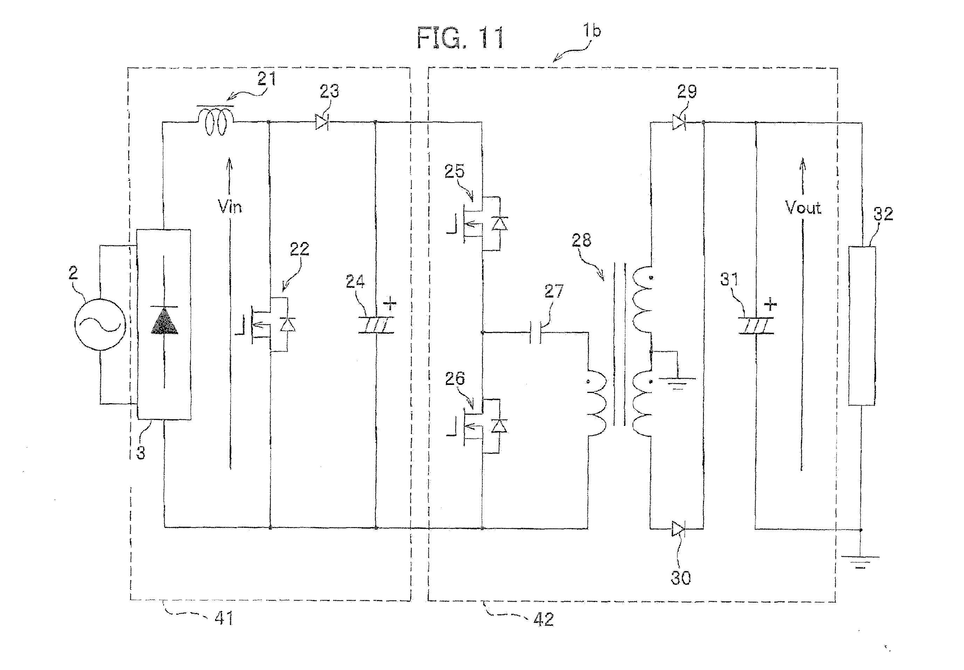

Fig. 11 is a circuit diagram of a general switching power supply (internal prior art).

The switching power supply 1b shown in Fig. 11 includes a boost type of PFC power converter 41 at a front stage and an isolated DC (direct current)-DC converter 42 at a subsequent stage.

In the boost type of PFC power converter 41 (hereinafter referred to as PFC power converter 41), a rectifying diode bridge 3 is connected to an AC power source 2. A series circuit including a coll 21 and a switching element 22 is connected between positive and negative terminals of the rectifying diode bridge 3. Connected to a junction between the coil 21 and the switching element 22 is an anode of a boost diode 23. A cathode of the boost diode 23 is connected to a high voltage side of an output smoothing capacitor 24. A low voltage side of the output smoothing capacitor 24 is connected to a negative side of the diode bridge 3.

An input current waveform is controlled by control of a proportion of time between on and off periods in the switching element 22 for PFC control so that the output smoothing capacitor 24 is charged through the boost diode 23 and a boosted voltage is stored in the output smoothing capacitor 24.

The isolation type of DC-DC converter 42 at the subsequent stage is a converter of a resonance current type. In operation, two switching elements 25 and 26 are controlled to turn on and off complementarily at a proportion of time of about 50%. As a result, a resonance current generated by a resonance circuit including a resonance capacitor 27 and a transformer 28 is rectified and smoothed by diodes 29 and 30 and an output capacitor 31 on the secondary side and supplies a desired DC output voltage to a load 32.

Because the PFC power converter 41 shown in Fig. 11 has no isolation function and is of a boost type, to obtain a DC voltage of 24 V and 12 V, an isolation type of DC-DC converter 42 with an isolated transformer is connected to the PFC power converter 41 at a subsequent stage of the PFC power converter 41 to obtain a desired a DC voltage. In this structure, because the power converting circuits are necessary to provide the DC voltage, a total conversion efficiency is low and has a problem in saving energy.

Further, in the switching power supply 1b shown in Fig. 11, control signals for the switching element 22 of the PFC power converter 41 and the switching elements 25 and 26 used in the isolation type DC-DC power converter 42 are generally generated by different control IC (Integrated Circuit), there is a limit in decrease in a total cost such as decrease in the number of the parts of the control IC and other components.

Further, because the switching power supply 1b shown in Fig. 11 has a two-stage structure, if both the power converters 41 and 42 provide efficiencies of, for example, 90%, a total efficiency becomes 81%. Accordingly, although efficiencies of both power converters 41 and 42 are made high, the total efficiency of the whole may not increase.

### SUMMARY OF THE INVENTION

An aspect of the present invention provides a switching power supply and a method of switching with a high efficiency.

Another aspect of the present invention provides a switching power supply for generating a DC voltage from an AC input voltage, comprising:
a rectifying circuit (3) for rectifying the AC input voltage and generating an output between first and second polarity terminals (N1, N2) thereof;
a first capacitor (Cdc1) connected in parallel to the rectifying circuit;
an inductor (Lin), having one and other ends (N1, N3), connected to the first polarity terminals at the one end (N1);
first and second circuits (11, 12) connected to and in parallel between the other end (N3) of the inductor and the second polarity terminal (N2) of the rectifying circuit;
a transformer (Tr) including primary and secondary windings coupled to each other, wherein the first circuit (11) includes first and second switching elements (Q1, Q2) connected in series, and the second circuit (12) includes a third switching element (Q3) and a second capacitor connected in series;
a third circuit (13), including the primary winding and a third capacitor connected in series, connected an parallel to the second switching element; and
a rectifying and smoothing circuit (D1, D2, 4) connected to the secondary winding.

A still another aspect of the present invention provides a method of switching in the switching power supply according to the another aspect, comprising the steps of: (a) turning on the first and second switching elements simultaneously; and (b) turning off the third switching element while the first and second switching elements are simultaneously turned on.

### BRIEF DESCRIPTION OF THE DRAWINGS

The object and features of the present invention will become more readily apparent from the following detailed description taken in conjunction with the accompanying drawings in which:
Fig. 1 is a circuit diagram of a switching power supply according to a first embodiment of the present invention;
Fig. 2 shows charts showing a relation among waveforms of an input voltage Vin, an input current lin, a voltage of the Cdc2, and an output voltage Vout according to the first embodiment;
Fig. 3 shows timing charts for illustrating a control operation performed during a period T1 shown in Fig. 2;
Fig. 4 shows timing charts for illustrating a control operation performed during a period T2 shown in Fig. 2;
Figs. 5A to 5E show circuit diagrams at timing t1 to t5 for illustrating current statuses;
Figs. 6A and 6B show timing charts for comparing operations shown in Figs. 3 and 4 in the switching power supply;
Fig. 7 is a block diagram of a controller for controlling the switching power supply according to the first embodiment and shows input and output information;
Fig. 8 shows timing charts for illustrating other control operations during the period T2 shown in Fig. 2 according to a second embodiment;
Fig. 9 shows waveforms of an input voltage Vin, an input current lin, a voltage of a capacitor Cdc2, and an output voltage Vout according to the second embodiment;
Fig. 10 is a circuit diagram of a switching power supply according to a third embodiment of the present invention; and
Fig. 11 is a circuit diagram of an internal prior art.

### DETAILED DESCRIPTION OF THE INVENTION

With reference to drawings will be described embodiments of the present invention.

The same or corresponding elements or parts are designated with like references throughout the drawings and duplicated descriptions will be omitted.

The present invention provides a one-stage type switching power supply and a method of switching with a hugh power factor, a high isolation, a high output power stability and can provide a switching power supply suitable tor thinned display units for example in a liquid crystal display television set and a plasma television set.

### [FIRST EMBODIMENT]

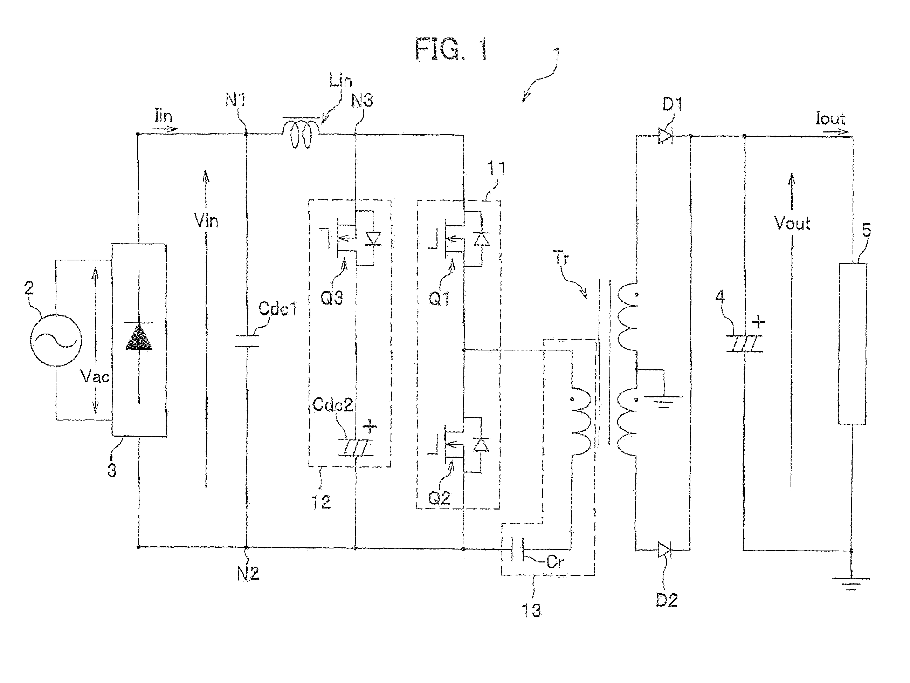

With reference to Figs. 1 to 7 will be described a first embodiment.

### Structure

Fig. 1 shows a circuit of a switching power supply according to a first embodiment of the present invention.

In the switching power supply 1, an input voltage from an AC power supply 2 is supplied to a diode bridge 3 for rectifying the input voltage and supplying a full wave rectified waveforms from the input voltage. The diode bridge 3 supplies an input current Iin and an input voltage Vin for the following stage. In Fig. 1, the AC power supply 2 and the diode bridge 3 are designated with the same references in Fig. 11 because there are the same.

Connected in parallel between a positive terminal N1 and a negative terminal N2 on a DC side (an output side) of the diode bridge 3 is a capacitor Cdc1 as a first capacitor. An inductor Lin is connected at one end thereof to the positive terminal N1 of the rectifying circuit 3. Further, a second circuit 12 is connected to and in parallel between the other end of the inductor Lin (N3) and the negative terminal N2 of the rectifying circuit 3. The second circuit 12 includes a switching element Q3 as a third switching element and a capacitor Cdc2 as a second capacitor connected in series.

Further, a first circuit 11 is connected to and in parallel between the other end of the inductor Lin (N3) and the negative terminal N2 of the rectifying circuit 3. The first circuit 11 includes a switching element Q1 as a first switching element and a switching elements Q2 as a second switching element connected in series.

Further a third circuit 13 is connected in parallel to the switching element Q2, The third circuit 13 includes A primary side (primary winding) of a transformer Tr and a capacitor Cr (resonance capacitor) as a third capacitor Connected in series.

Will be described a smoothing circuit.

In the smoothing circuit, a secondary side (secondary windings) has a center tap grounded, and the other ends of the secondary windings are connected to anodes of the diodes D1 and D2. Cathodes of the diodes D1 and D2 are connected to a positive terminal of a capacitor 4. A negative terminal of the capacitor is grounded, and the capacitor 4 is connected to a load 5 in parallel to supply an output.
The capacitor 4 supplies an output current lout and an output voltage Vout to the load 5.

Fig. 1 shows only one transformer Tr. However, this circuit may be configured with a plurality of small and thin type of transformers in which primary sides are connected in series and secondary sides are connected in parallel. This configuration can reduce a thickness at a part of the transformer Tr, so that a thickness of the whole of the switching power supply can be reduced. This allows the power supply to be built in a liquid crystal display television set featuring small thinness.

### Operation

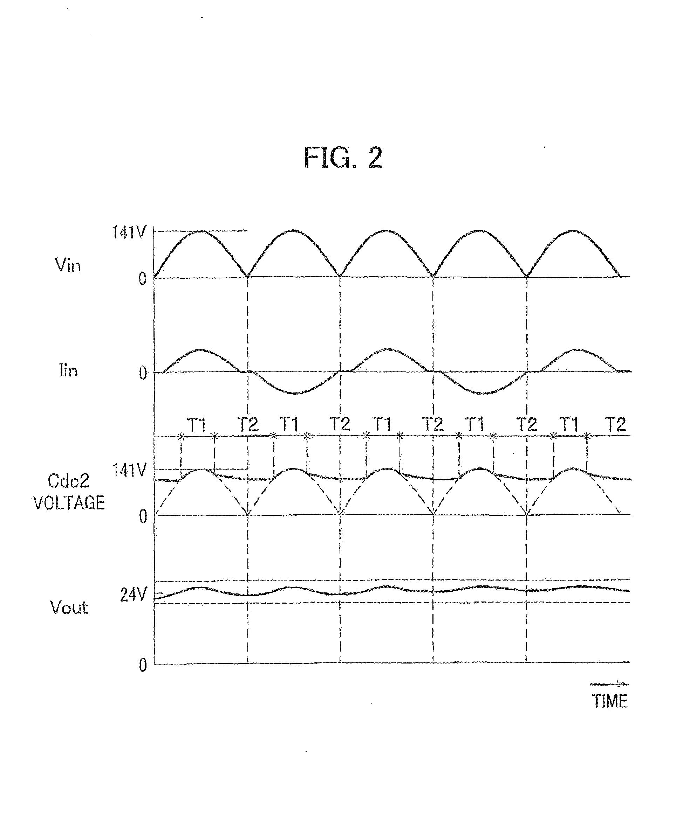

With reference to Figs. 2 to 5E will be described an operation of the switching power supple 1 according to the first embodiment.

With reference to Fig. 2 will be described a general AC operation of the switching power supply 1 according to the first embodiment.

Fig. 2 shows charts showing an input voltage Vin, an input current lin, and an output voltage of the capacitor Cdc2 when a control for the switching power supply according to she first embodiment is performed.

More specifically, Fig. 2 shows time variations of the input voltage Vin (141V) after full-wave rectifying by the diode bridge 3, the input current lin from the diode bridge 3, and the output voltage (Cdc2 voltage) of the capacitor Cdc2 connected to the switching element Q3, and the output voltage Vout.

The voltage Vin after the full-rectifying has a sine waveform with a positive polarity. The control is made in accordance with the voltage waveform of the input voltage Vin, because the input current lin varies in accordance with the voltage applied to the capacitor Cdc1 (mentioned later). Accordingly, the input current lin becomes the waveform shown in Fig. 2. However, for periods where the input voltage Vin is near "0", a value (absolute value) of the input current lin becomes about "0" because a function that the input current lin is drawn by simultaneously turning on the switching elements Q1 and Q2 (mentioned later) does not work.

On the other hand, a relation between the Cdc2 voltage and the input voltage Vin is shown in a third chart in Fig. 2. The Cdc2 voltage is shown with a solid line, and the input voltage Vin is shown with a broken line, and these are partially overlapped with each other.

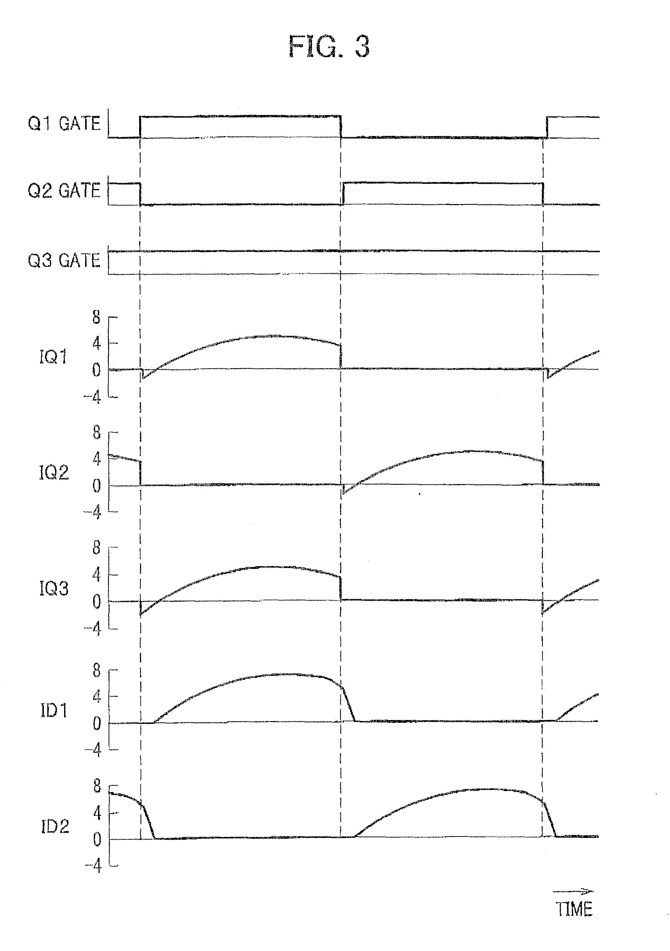

Because the input current lin is not cut off for the period (period T2) where two lines are overlapped with each other, the switching power supply 1 operates in a current resonance mode shown in Fig. 3 (mentioned later).

On the other hand, because the input current lin is cut off for periods where the input voltage Vin is lower than the Cdc2 voltage shown with the solid line, the input current lin is controlled by simultaneously turning on the switching elements Q1 and Q2 as well as switching the switching element Q3 in connection with the turn on.

As mentioned above, because the input current lin can be obtained at a high proportion of time, the output voltage Vout (24V) shown in the lowest chart in Fig. 2 provides a stable output although the output voltage Vout shows a small variation in accordance with the input current lin (with ripple components).

Further, the variation in the output voltage Vout can be made more stable by a more precise control in consideration of a characteristic of the load.

With reference to Figs. 3 to 5E in addition to Fig. 1, will be described a control operation of the switching power supply according to the first embodiment.

Fig. 3 shows timing charts illustrating the control operation performed for the periods T1 shown in Fig. 2.

Two switching elements Q1 and Q2 for controlling a current resonation operate at a proportion of time of approximately 50%. In this case, on-periods of the switching elements Q1 and Q2 are not overlapped with each other, that is, the switching elements Q1 and Q2 operate complementarily in time base, and the switching element Q3 always turns on.

Through the switching elements Q1 and Q2, currents IQ1 and IQ2 having similar waveforms flow during respective on-periocls, and on the secondary side, an output current lout is generated through rectifying diodes D1 and D2 (current waveforms ID1 and ID2). A current IQ3 flowing through the switching element Q3 is similar to the current IQ1 flowing through the switching element Q1.

Further, the control operation shown in Fig. 3 is substantially the same as control operations generally done in the switching power supply 1b shown in Fig. 11 except boosting.

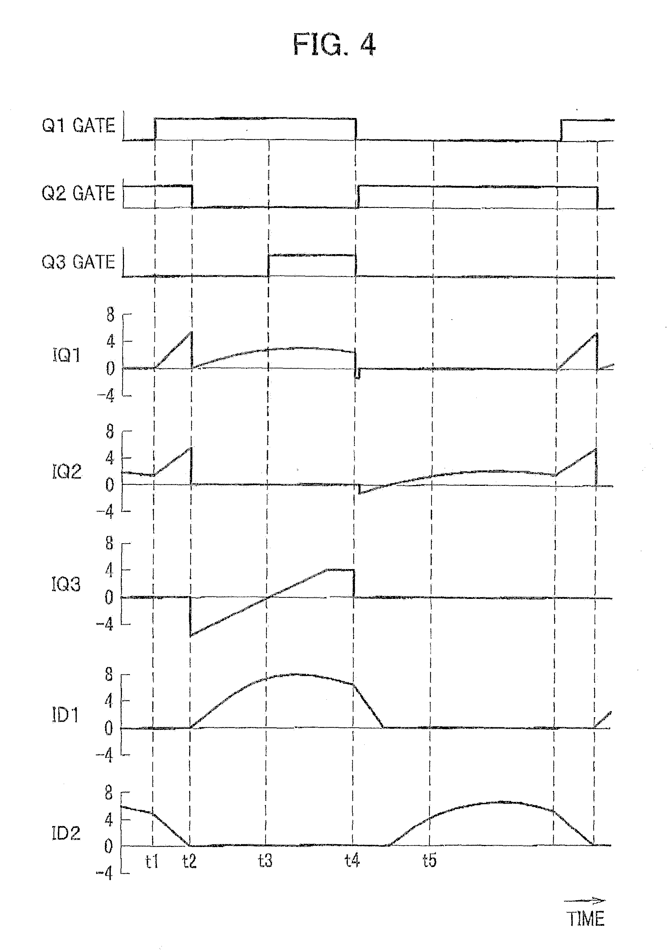

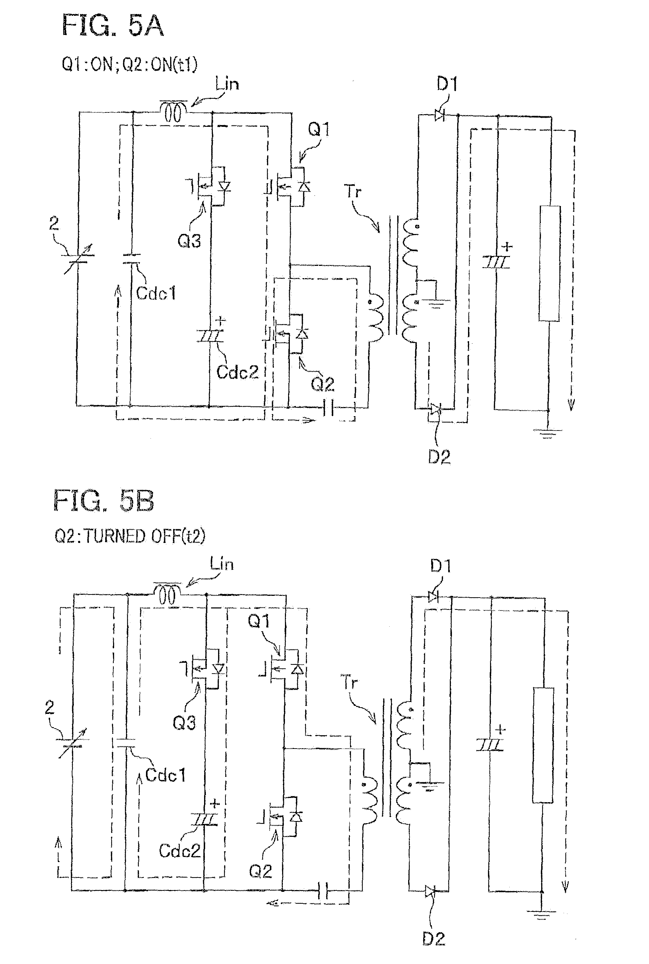

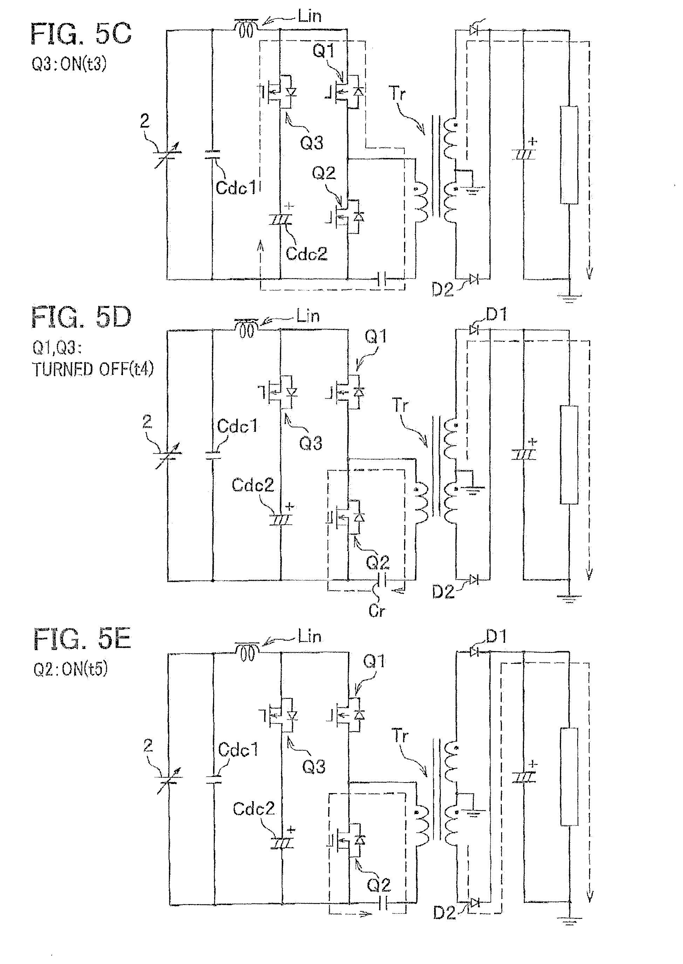

With reference to Figs. 4, 5A to 5E, will be described a switching operation in which both switching elements Q1 and Q2 simultaneously turns on for the periods T2 shown in Fig. 2.

Fig. 4 shows timing charts for the control operation done for the periods T2 shown in Fig. 2, and Figs. 5A to 5A to 5E show current statuses in the circuit at respective timings. In Fig. 4, timings t1 to t5 are shown near the chart of the ID2.

In this control, the switching element Q1 is controlled at a proportion of time of approximately 50% similarly to Fig. 3. On the other hand, on-periods of the switching element Q2 are extended by approximately 10% which provides periods where both switching elements Q1 and Q2 simultaneously turn on (t1 to t2). Because the switching element Q3 turns off for this period, in the switching elements Q1 and Q2 the current supplied from the capacitor Cdc1 flows through the inductor Lin as shown in Figs. 5A and substantially monotonously increases as shown in Fig. 4.

The current is determined in accordance with an electrostatic capacitance of the capacitor Cdc1, values of the inductor Lin, and a potential of the capacitor Cdc1. Further, because the potential of the capacitor Cdc1 should be lower than the input voltage Vin after rectifying the commercial AC power supply 1 to draw the current from the diode bridge 3 as the input power supply described on the timing t2 (mentioned later), it is necessary to set a value of an energy charged in the capacitor in the switching period and values for decreasing the voltage of the capacitor Cdc1 for the period in which the switching elements Q1 and Q2 simultaneously turn on. To reduce an energy charged in the capacitor Cdc2 in the switching period and to decrease variation in the voltage of the capacitor Cdc1 for a short interval, it is desirable that values of the capacitor Cdc1 and the inductor Lin are small. For example, the capacitance of the capacitor Cdc1 is approximately from tens nano-farads to tens microfarads, and the inductance of the inductor Lin is approximately from tens microfarads to a hundred microhenries, that is, small value elements are preferably used.

When the voltage of the capacitor Cdc1 becomes lower than the input voltage Vin by that the capacitor Cdc1 is discharged as shown in Fig. 5A, a sufficient energy is discharged. When the discharged energy has been accumulated in the inductor Lin, the switching element Q2 is turned off at timing t2. Then, the input current from the diode bridge 3 flows into the capacitor Cdc1 as shown in Fig. 5B, so that an energy is charged in the capacitor Cdc1. Further, a larger part of the output current from the inductor Lin which loses a following current path by turn off of the switching element Q2 flows into the capacitor Cdc2 through a parasitic diode of the switching element Q3.

At beginning of this operation, the current IQ3 in the switching element Q3 has a sign of negative (flows from the switching element Q3 to the capacitor Cdc2). However, when a sufficient energy is stored in the capacitor Cdc2 shortly, the circuit moves to a status where a positive current is discharged (flows from the capacitor Cdc2 to the switching element Q3). Then, the energy stored in the capacitor Cdc2 can be supplied to the transformer Tr as shown in Fig. 5C, so that Zero Current Switching (ZCS) can be done. This provides low loss switching.

Next, when an on-period of the switching element Q1 expires, the switching elements Q1 and Q3 are turned off, and the switching element Q2 is turned on at timing t4. In this operation, although a slight current charging the capacitor Cr (resonance capacitor flowing through the switching element Q1) is left, as shown in Fig. 5D, this current changes into a current flowing through a parasitic diode of the switching element Q2, so that charging the capacitor Cr in this direction will finish shortly.

Following to this, because the switching element Q2 is in the on-status, a charge stored in the capacitor Cr is discharged as an inverse current flowing through the switching element Q2 and the transformer Tr. During this operation, the secondary side moves from a status where the current in the secondary side is supplied to the load through the diode D1 to a status where the current is supplied to the load through the diode D2. After that, when it becomes the timing of turn on of the stitching element Q1 again, this cycle is repeated. The resonation is maintained by a part including the capacitor Cr and the transformer Tr in the switching cycles, and the current, i.e., a power, is transferred to the secondary side though the diodes D1 and D2 alternately.

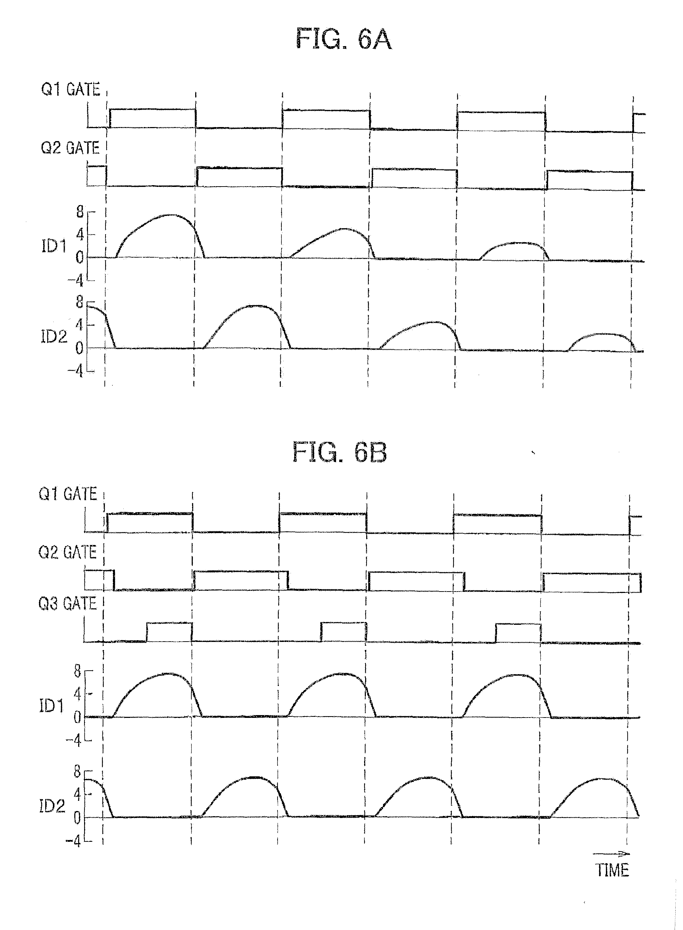

Next, with reference to Fig. 6, the switching operations under control shown in Figs. 3 and 4 are compared with each other.

Fig. 6A and 6B show timing charts for comparison between the switching operations. Fig. 6A shows timing charts under control shown in Fig. 3, and Fig. 6B shows timing charts under control shown in Fig. 4. Both Figs. 6A and 6B show statuses off operation for the periods T2 shown in Fig. 2 to illustrate efficiency.

Figs. 6A and 6B show three cycles of the operations shown in Figs. 3 and 4.

As shown in Fig. 6A, if the control is done without simultaneously turning on the switching elements Q1 and Q2, the currents flowing through the diodes D1 and D2 (output currents of the switching power supply) will gradually decreases. This is because for the period T2 in Fig. 2, the potential of the capacitor Cdc1 is hig-her than the input voltage Vin, no energy is supplied, so that the energy is only discharged to the resonance circuit (the capacitor Cr and the transformer Tr).

Accordingly, if this operation shown in Fig. 6A (control shown in Fig. 3) is successively done, the currents ID1 and ID2 flowing through the diodes D1 and D2 will decrease because the energy is only discharged when the potential of the capacitor Cdc1 is higher than the input voltage Vin for the period T2 shown in Fig. 2.

In the first embodiment, as shown in Fig. 6B, providing the period for which both switching elements Q1 and Q2 are simultaneously turned on makes the voltage applied to the capacitor Cdc1 lower than the input voltage Vin to allow the input current lin to be supplied. This prevents the currents in the diodes D1 and D2 from decreasing as shown in Fig. 6B. For the period T1 where the energy is supplied from the diode bridge 3 (see Fig. 2), the control shown in Fig. 6A is made, and for the period where the energy is not supplied from the diode bridge 3, the control shown in Fig. 6B is made, so that the output voltage Vout is generated stable as shown by the charts in Fig. 2.

Generally, if both switching elements Q1 and Q2 are simultaneously turned on, this is not desirable because a surge current flows in a vary short time interval. In the first embodiment, the inductor Lin is provided for impeding the surge current although both the switching elements Q1 and Q2 are simultaneously turned on.

In Fig. 4, the operation has been described about timing of turn off of the switching elements Q1 and Q2 which are simultaneous. However, for example, if it is desirable to reduce the power to the secondary side (the side of the diodes D1 and D2 shown in Fig. 1) because the load is small, the timing of turn off can be made earlier.
A target of the timing of turn off of the switching element Q3 is such that a period from the turn off of the switching element Q2 to turn on of the switching element Q3 is equivalent to a period from turn on of the switching element Q3 to turn off of the switching element Q3. Accordingly charges (energy) charged in and discharged from the capacitor Cdc2 during these periods in total are constant, so that the voltage of the capacitor Cdc2 does not vary. This is preferable for control before and after these periods.

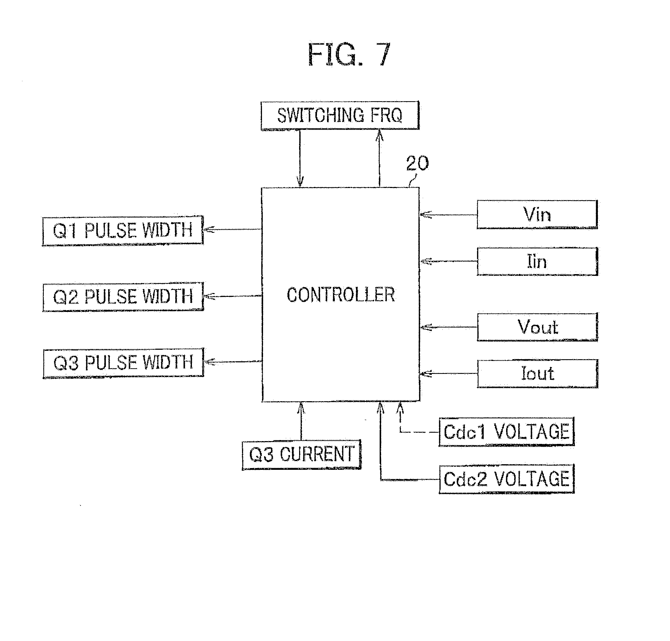

Next with reference to Fig. 7, will be described a method of controlling the switching power supply according to the first embodiment.

Fig. 7 shows input information to and output information from a controller for controlling the switching power supply according to the first embodiment.

The controller 20 as a processor monitors in real-time manner the input voltage Vin, the output current lin, the output voltage Vout, the output current lout, and the voltage of the capacitor Cdc2 (Cdc2 voltage), and the current through the switching element Q3 (Q3 current) as the input information.

From statuses of the input information, the input current lin required is calculated, and a switching frequency which is a base for control is calculated on the basis of calculation of the input current lin. Further from a potential difference between the Cdc2 voltage and the input voltage Vin a time interval for which both switching elements Q1 and Q2 are simultaneously turned on and pulse widths (Q1 pulse width, Q2 pulse width) are determined. In addition, the controller determines a pulse width for the switching element Q3.

The controller 20 supplies drive signals (not shown) to the first to third switching elements (Q1 to Q3) through a gate driver IC (not shown) with a high withstanding voltage, the drive signals having durations corresponding to the pulse widths of the switching elements A1 to Q3.

Further, although it is not always necessary for such control the controller 20 further monitors the voltage of the capacitor Cdc1 (Cdc1 voltage) and more precisely calculates the time intervals for which the switching elements Q1 and Q2 turn on. This provides a more precise control of the input current drawn. This is for discharging the energy stored in the capacitor from timing t1 to t2 in Fig. 4.

The input voltage Vin from the diode bridge 3 is detected as the input voltage. However, in place of this, an output voltage Vac of the commercial AC power supply 1 is detected to perform a similar control.

Further, the control in which both the switching elements Q1 and Q2 simultaneously turn on, that is, the control shown in Fig. 4, is done, with the switching element Q3 being left in a turned off status, the controller 20 monitors the current flowing through the switching element Q3 (Q3 current) as shown in Fig. 6B. When the current flowing through the switching element Q3 varies from a negative value to a positive value after turn off of the switching element Q2, the controller 20 performs turn-on control of the switching element Q3.

On the other hand, the control in which the switching elements Q1 and Q2 are not simultaneously turned on is made, that is, the control shown in Fig. 3 is performed, the controller 20 performs the control as the switching element Q3 is always turned on. More specifically, a pulse width of the switching element Q3 (Q3 pulse width) is determined.

In other words, the controller 20 determines and outputs the switching frequency of the switching element Q3 from inputs of the switching frequencies of the switching elements Q1 and Q2.

According to the structure mentioned above, only one controller 20 can controls the switching power supply 2.

As the controller 20, a Field Programmable Gate Array (FPGA) which becomes popular can be used to perform a real-time status determination, selecting respective operation modes, and determination of the pulse width and timing.

The control of the switching power supply is performed such that a program stored in a ROM (Read Only Memory) (not shown) in the controller 20 is conducted by a CPU (Central Processing Unit) (not shown) in the controller 20 and the like.

In the first embodiment, power MOSFETs (Metal Oxide Semiconductor Field Effect Transistor) are used as the switching elements Q1 and Q2. However, according to a current capacity and voltage conditions, IGBTs (Insulated Gate Bipolar Transistor) may be used. Further, a power device using a material of SiC (Silicon Carbide) can be used for the switching elements Q1 and Q2 including the diodes.

The output of the switching power supply 1 according to the first embodiment is used in the load 5 as shown in Fig. 1. However, the output is used in an inverter circuit for driving a backlight for example in liquid crystal display television sets. More specifically, the load 5 may be an inverter circuit for example. The switching power supply 2 and the inverter circuit (the load 5) are generally separated. However, these may be integrated together. Advantageous Effect in First Embodiment

According to the first embodiment, the number of conversion circuit parts for obtaining a DC output insolated from an AC commercial power supply can be decreased, so that an efficiency of the power supply can be improved. In other words, the switching power supply according to the first embodiment has no divided structure between boost and back parts, so that a conversion loss can be prevented.

Further, according to the first embodiment, for a phase period where the input voltage Vin is low, the energy in the capacitor Cdc1 is discharged to decrease the output voltage of the capacitor Cdc1, so that the input current lin can be drawn from the input voltage Vin. This provides a stable output efficiently.

Further, the switching power supply 1 can be controlled with one controller 20. This can make a manufacturing cost lower than a case where plural control ICs are used.

### [SECOND EMBODIMENT]

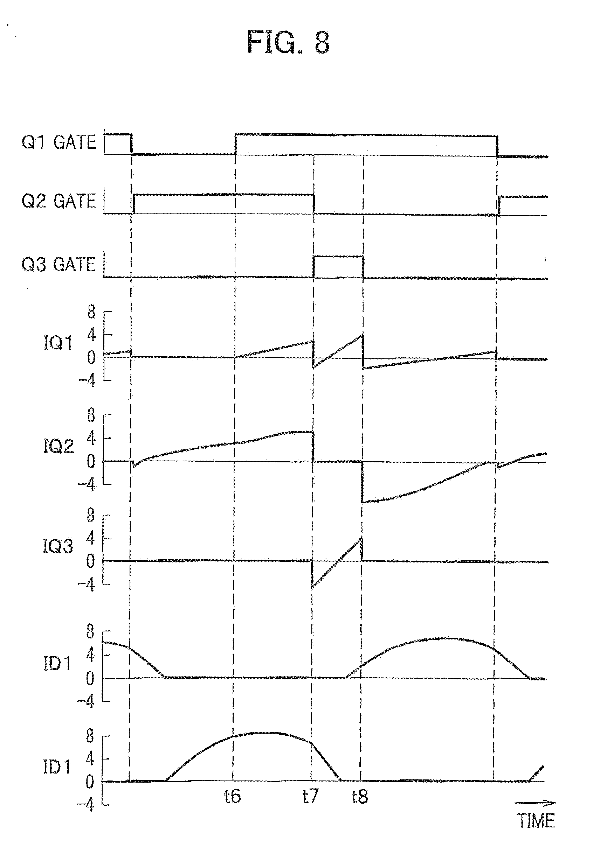

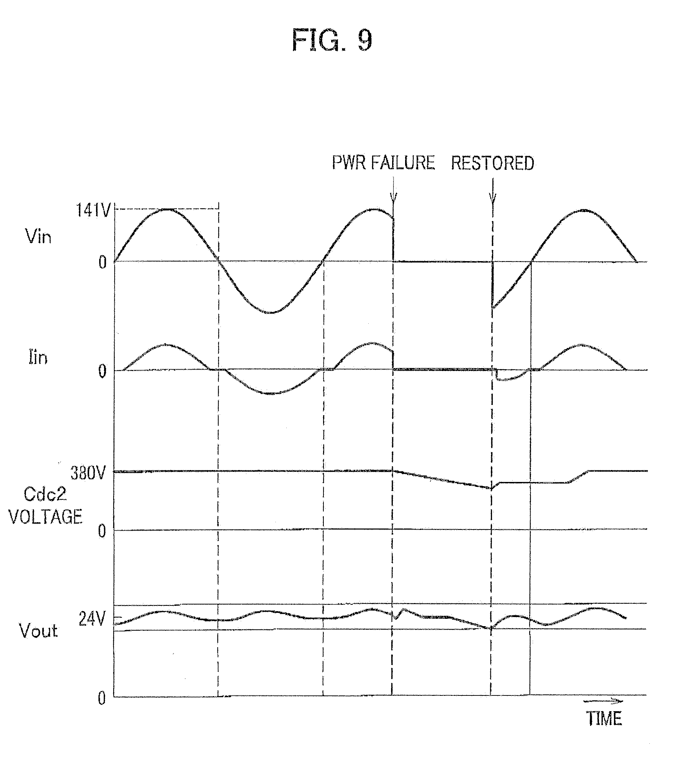

With reference to Figs. 8 and 9 will be described a second embodiment of the present invention. In the second embodiment, the period for which both switching elements Q1 and Q2 are simultaneously turned on is extended to increase the voltage of the capacitor Cdc2 against instantaneous power failure.

Fig. 8 shows timing charts for illustrating other control operations for the period T2. Because the circuit structure in the first embodiment can be also used in the second embodiment, with reference to Figs. 1 and 2, a switching operation in the second embodiment will be described. Further, for the period T1 shown in Fig. 2, the control operation is shown in Fig. 3 and the duplicated description will be omitted.

In an example of switching shown in Fig. 8, the switching element Q2 is turns on and off at a proportion of time of approximately 50%. On the other hand, the switching element Q1 is controlled at a proportion of time of approximately 50% complementarily to the switching element Q2 as shown in Fig. 3 for the period T1 shown in Fig. 2. Further, the timing when the switching element Q1 is turned on is advanced so that the switching element Q1 is turned on at t6, while the switching element Q2 stays in an on-state. In this operation, in addition to the general current shown in Fig. 3, currents flowing through the switching elements Q1 and Q2 increase in magnitude at a constant rate due to a function of the inductor Lin. On the other hand, during this, the inductor Lin is storing energy, and the longer the period for which both switching elements Q1 and Q2 are simultaneously turned on, the more quantity of energy is stored in the inductor Lin. However, it is preferable that the proportion of time is limited aground 25% of the switching cycle.

Next the switching element Q2 is turned off and simultaneously the switching element Q3 is turned on (t7). Then, the current flowing through the switching element Q2 currently once flows into the capacitor Cdc2 through the parasitic diodes of the switching elements Q1 and Q3. In this operation, the longer the period for which both the switching elements Q1 and Q2 are simultaneously turned on is (within a proportion of time of 25% of the switching cycle), the larger the quantity of the energy stored in the inductor Lin becomes, so that the current flowing into the capacitor Cdc2 becomes larger.

However, when the switching element Q3 is turned on, a resonance current flows into the primary side of the transformer Tr from the capacitor Cdc2 through the switching elements Q3 and Q1, and a charge current flows through the resonance capacitor Cr as well as the energy is transferred to the secondary side of the transformer Tr and an induced current flows through the diode D1.

Similarly to Fig. 5C, when a sufficient charge is charged in the capacitor Cdc2, a direction of the current flowing through the switching element Q3 is changed to "from the capacitor Cdc2 to the switching element Q3", and energy in the capacitor Cdc2 is discharged to the resonance system (capacitor Cr, transformer Tr). However, when the switching element Q3 is turned off at t8 before the current of which direction is changed increases not so much, that is, before not so much energy is discharged from the capacitor Cdc2, there is energy left in the capacitor Cdc2.

In this status, if the sequential control is performed again, energy is further stored in the capacitor Cdc2, so that the voltage of the capacitor Cdc2 is boosted.

As similar to the first embodiment, adjusting timing of turn on the switching element Q1 controls the input current lin. In order to maintain the resonance operation stable it is preferable that the period for which both the switching elements Q1 and Q2 simultaneously turn on is extended up to a proportion of time of approximately 25% of the switching cycle.

Further, the timing when the switching elements Q3 is turned on can be timing when the switching element Q2 is turned off as mentioned above. However, it is also possible that while the current flowing through the switching element Q3 is negative (the current flowing through the parasitic diode of the switching element Q3), as the switching element Q3 is left turned off, and when the current changes from negative to positive, the switching element Q3 is turned on, that is, Zero Current Switching (ZCS) can be done.

Further, according to a status of the output a quantity of energy transferred to the secondary side can be adjusted in accordance with the proportion of time of on-period of the switching element Q3. Particularly, the minimum quantity is zero, that is, the switching element Q3 may be left turned off within the switching cycle.

As mentioned above, in the second embodiment, it is possible that the energy supplied from the capacitor Cdc2 can be controlled by controlling the on-period of the switching element Q3 while the capacitor Cdc2 is storing energy. Therefore, by accumulating charges in the capacitor Cdc2 to have a voltage across both terminals of the capacitor Cdc2 up to, for example, approximately 380V, the switching power supply can be operated in a pseudo manner as the two-stage converter described with reference to Fig. 11.

Waveforms in this operation are shown in Fig- 9.

Fig. 9 shows waveforms of the input voltage Vin, the input current lin, the voltage of the capacitor Cdc2, and the output voltage Vout when the voltage across the capacitor Cdc2 is increased.

Fig. 9 shows an operation to increase the voltage across both terminals of the capacitor Cdc2 up to approximately 380 V by accumulating charges in the capacitor Cdc2 with the input voltage of 141 V (maximum voltage) of the commercial AC power supply. The voltage across both terminals of the capacitor Cdc2 can be increased by extending the period for which both the switching elements Q1 and Q2 are simultaneously turned on to increase the energy accumulated in the inductor Lin. However, as described earlier, it is not preferred that the period for which both the switching elements Q1 and Q2 are simultaneously turned on is extended over the proportion of time of approximately 25% in the switching cycle. The voltage of 380 V is an example, and the voltage may be any value higher than the input voltage of the AC commercial power supply.

If an instantaneous power failure occurs as shown in Fig. 9, the input current lin from the AC commercial power supply interrupts. However, the charges in the capacitor Cdc2 are discharged to maintain the output voltage Vout (24 V) in which voltage drop is suppressed within a predetermined range. If the input power is restored shortly, control is carried out to accumulate charges in the capacitor Cdc2 again with the output voltage being maintained.

As mentioned above, in the second embodiment, a larger quantity of energy is stored in the capacitor Cdc2, so that, for example, the switching power supply can supply the power to the secondary side in emergencies such as the instantaneous power failure.

Further, in the switching power supply according to the second embodiment, for a phase period where the input voltage Vin is relatively large, the on-period of the switching element Q3 can be made zero. This makes the switching frequency of the switching element Q3 lower than that in the switching power supply shown in Fig. 11 with a resultant low loss.

Further, the input information to and output information from the controller 20 is similar to that shown in Fig. 7. The power failure can be detected by monitoring the input voltage Vin.

### Advantageous Effect in Second Embodiment

According to the second embodiment, the voltage across the capacitor Cdc2 is boosted, so that even if the instantaneous power failure occurs, the power (energy) can be supplied to the secondary side.

### [THIRD EMBODIMENT]

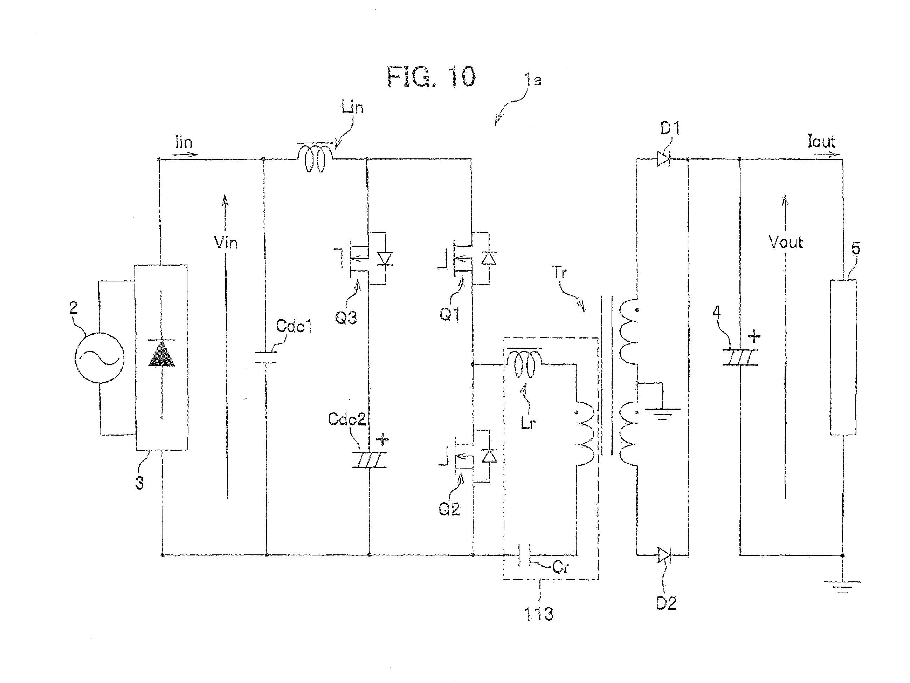

With reference to Fig. 10 will be described a third embodiment.

### Circuit Structure

Fig. 10 shows a circuit diagram of a switching power supply according to the third embodiment.

The switching power supply 1a shown in Fig. 10 is substantially the same as the switching power supply 1 shown in Fig. 1. The difference is in that an inductor Lr as a second inductor is connected in series with the primary winding in the third circuit 113.

For example, there is a case where metal parts or wirings in the circuit may be undesirably arranged near the transformer Tr if the switching power supply 1a is down-sized. In this case, if the transformer Tr has a winding structure with leak inductance, operation of the switching power supply tends to be unstable because eddy currents are generated in the metal parts as a result of interaction with the adjacent metal parts. To avoid this, it is necessary to use a transformer with an extreme low leak inductance as the transformer Tr. However, because this may cause a restriction in setting the desired value of the inductance necessary for current resonance, an inductor Lr may be further provided for assistance. More specifically, generally, the circuit is designed to provide the current resonance using the leaked inductance also. However, there may be a case where a necessary leak inductance is also reduced in addition to minimized leak inductance in the transformer Tr mounted on the circuit. To avoid this case, an additional inductor Lr may be mounted to adjust the necessary inductance for current resonance.

The switching power supply 1a shown in Fig. 10 can perform any operations according to the first and second embodiments. Advantageous Effect in Third Embodiment

According to the third embodiment, the inductance necessary for the current resonance can be provided even if a transformer having an extremely low leak inductance is mounted on the circuit as the transformer Tr.

The above embodiments of the invention as well as the appended claims and figures show multiple characterizing features of the invention in specific combinations. The skilled person will easily be able to consider further combinations or sub-combinations of these features in order to adapt the invention as defined in the in the claims to his specific needs.

## Claims

1. A switching power supply (1, 1a) for generating a DC voltage from an AC input voltage, comprising;
a rectifying circuit (3) for rectifying the AC input voltage and generating an output between first and second polarity terminals (N1, N2) thereof;
a first capacitor (Cdc1) connected in parallel to the rectifying circuit;
an inductor (Lin), having one and other ends (N1, N3), connected to the first polarity terminal at the one end (N1);
first and second circuits (11, 12) connected to and in parallel between the other end (N3) of the inductor and the second polarity terminal (N2) of the rectifying circuit;
a transformer (Tr) including primary and secondary windings coupled to each other, wherein the first circuit (11) includes first and second switching elements (Q1, Q2) connected in series, and the second circuit (12) includes a third switching element (Q3) and a second capacitor connected in series;
a third circuit (13, 113), including the primary winding and a third capacitor connected in series, connected in parallel to the second switching element; and
a rectifying and smoothing circuit (D1, D2, 4) connected to the secondary winding.

2. The switching power supply according to claim 1, wherein the third circuit further comprises a second inductor connected to one terminal of the primary winding in series.

3. A method of switching in the switching power supply according to claim 1, comprising the steps of:
(a) turning on the first and second switching elements (Q1, Q2) simultaneously; and
(b) turning off the third switching element (Q3) while the first and second switching elements are simultaneously turned on.

4. The method according to claim 3, wherein the steps (a) and (b) are done when an output of the rectifying circuit is lower than a voltage across the first capacitor.

5. The method according to claim 3, further comprising the steps of:
(c) turning on the first switching element and turning off the second switching element; and
(d) turning on the third switching element while the first switching element is turned on and the second switching element is turned off.

6. The method according to claim 3, further comprising the step of:
turning off the third switching element before all charges accumulated in the second capacitor are discharged to boost the voltage across the second capacitor.
